# EUROPÄISCHE PATENTSCHRIFT

(11) **EP 2 274 986 B1**
(45) Veröffentlichungstag und Bekanntmachung des Hinweises auf die Patenterteilung: **10.01.2018**
(21) Anmeldenummer: 10169690.4
(22) Anmeldetag: 15.07.2010
(51) Int. Cl.: A22C 11/00, A22C 11/10

(54) **Verfahren und Vorrichtung zum Herstellen von Würstchen**
Device and method for manufacturing sausages
Procédé et dispositif de fabrication de petites saucisses

(30) Priorität: 17.07.2009 DE 102009033725
(43) Veröffentlichungstag der Anmeldung: 19.01.2011
(73) Patentinhaber: VEMAG Maschinenbau GmbH, 27283 Verden/Aller (DE)
(72) Erfinder: Bilowski, Jörg, 22941, Delingsdorf (DE); Hiller, Klaus, 27313, Dörverden (DE); Jeschke, Michael, 27299, Langwedel-Dörverden (DE)
(74) Vertreter: Eisenführ Speiser

(56) Entgegenhaltungen:
- EP-A2- 2 364 596
- DE-A1- 4 307 637
- DE-U1- 29 604 856
- US-A- 4 104 763
- US-A- 4 322 871

## Beschreibung

Die vorliegende Erfindung betrifft ein Verfahren zum Herstellen von Würstchen, bei dem Wurstbrät mittels einer Füllmaschine in eine schlauchförmige Hülle eingefüllt wird und die gefüllte Hülle mittels einer Abdrehvorrichtung zur Erzeugung von Abdrehstellen in Abschnitte eingeteilt wird, so dass eine Würstchenkette entsteht, wobei die Würstchenkette mittels mindestens zweier in Transportrichtung der Würstchenkette hintereinander geschalteten Transporteinrichtungen weitertransportiert wird.

Die Erfindung betrifft ferner eine Vorrichtung zum Herstellen von Würstchen, mit: einer Füllmaschine zum Einfüllen von Wurstbrät in eine schlauchförmige Hülle, einer Abdrehvorrichtung zum Abteilen der gefüllten Hülle in einzelne Abschnitte unter Bildung einer Abdrehstelle, einer ersten Transporteinrichtung, die in Transportrichtung der Abdrehvorrichtung nachgeschaltet ist und einer zweiten Transporteinrichtung, die in Transportrichtung der ersten Transporteinrichtung nachgeschaltet ist.

Eine solche Vorrichtung und Verfahren sind bekannt, um Würstchen im Natur-, Kunst- oder Collagendarm herzustellen. Das Wurstbrät wird in einem Fülltrichter einer WurstFüllmaschine bereitgehalten und durch ein an die Füllmaschine angeschlossenes Füllrohr in einen Darm eingefüllt. Mit einer Abdrehvorrichtung werden zwischen einzelnen Abschnitten des gefüllten Darms Abdrehstellen erzeugt, so dass eine Kette aus einzelnen, aber noch verbundenen Würstchen entsteht. Mittels einer Transporteinrichtung wird die Würstchenkette anschließend in vielen Anwendungsfällen einer Trenneinrichtung zugeführt, die die Würstchenkette im Bereich einer Abdrehstelle durchtrennt, so dass einzelne Würstchen oder eine Gruppe von miteinander verbundenen Würstchen entsteht. Die einzelnen Würstchen oder die Gruppe werden anschließend verpackt oder thermisch behandelt.

Aus DE 296 04 856 U1 ist ein Verfahren und eine Vorrichtung zum Herstellen von Würstchen bekannt, bei dem Wurstbrät portionsweise mittels einer Fülleinrichtung in eine Hülle eingefüllt wird und die Portionen dann durch Drehen der Hülle voneinander abgeteilt werden. Der Weitertransport der erzeugten Würstchenkette erfolgt dann über mindestens zwei in Transportrichtung der Würstchenkette hintereinander geschaltete Transporteinrichtungen. Um die abgeteilten Portionen der Wurstkette einfacher voneinander zu trennen, wird die jeweils nachgeschaltete Transporteinrichtung mit einer dauerhaft höheren Geschwindigkeit angetrieben

Dem Transport der Würstchenkette kommt eine besondere Bedeutung zu. Im Hinblick auf das Trennen mittels der Trenneinrichtung ist es wichtig, dass die Würstchenkette zuverlässig von der Abdrehvorrichtung abtransportiert und weiter zu der Trenneinrichtung gefördert wird. Ferner ist es im Hinblick auf die Trennung von Bedeutung, dass eine Abdrehstelle eine ausreichende Länge aufweist, so dass nach dem Trennen die Würstchen zuverlässig an ihren Enden verschlossen bleiben.

Ferner ist es eine besondere Anforderung, die Vorrichtungen und Verfahren so auszubilden, dass sie flexibel an unterschiedliche Produkte oder Anwendungen angepasst werden können. Beispielsweise ist eine Anpassung an den jeweils verwendeten Darm, also Natur-, Kunst- oder Collagendarm oder auch an unterschiedliche Wurstlängen oder Kaliber erforderlich.

Vor diesem Hintergrund ist es Aufgabe der vorliegenden Erfindung, ein Verfahren und eine Vorrichtung zum Herstellen von Würstchen bereitzustellen, mit denen der Transport im Hinblick auf eine Trennung der Würstchenkette in einzelne Würstchen verbessert und zugleich Beschädigungen an den den Würstchen vermieden werden.

Die Erfindung löst die Aufgabe bei einem Verfahren gemäß Anspruch 1 dadurch, dass die Transporteinrichtungen mittels einer Steuerungseinrichtung so gesteuert werden, dass die Transportgeschwindigkeit der in Transportrichtung zweiten Transporteinrichtung temporär zur Transportgeschwindigkeit der ersten Transporteinrichtung erhöht wird, wobei der Transport der Würstchenkette diskontinuierlich oder kontinuierlich erfolgt und die Geschwindigkeit der ersten und zweiten Transporteinrichtung mit Hilfe der Steuerungseinrichtung individuell vorgebbar ist. Die Erfindung löst die Aufgabe ferner bei einer Vorrichtung gemäß Anspruch 9 durch eine Steuerungseinrichtung, die mit der ersten und zweiten Transporteinrichtung so zusammenwirkt, dass die Transportgeschwindigkeit der zweiten Transporteinrichtung temporär zur Transportgeschwindigkeit der ersten Transporteinrichtung erhöht wird, wobei die Geschwindigkeit der ersten, zweiten Transporteinrichtung für einen diskontinuierlichen oder kontinuierlichen Transport der Würstchenkette individuell einstellbar ist. Erfindungsgemäß wird also vorgeschlagen, dass zwei Transporteinrichtungen die von der Füllmaschine und Abdrehvorrichtung bereitgestellte Würstchenkette weitertransportieren. Dadurch kann erreicht werden, dass die Würstchenkette abschnittsweise mit unterschiedlichen Geschwindigkeiten transportiert wird. Insbesondere in dem Fall, dass verfahrensgemäß die Transportgeschwindigkeit der zweiten Transporteinrichtung höher ist als die Transportgeschwindigkeit der ersten Transporteinrichtung, lässt sich eine Längung der Würstchenkette, insbesondere eine Längung oder Streckung einer Abdrehstelle erreichen. Hierdurch wird erreicht, dass zum einen ein einzelnes Würstchen mit einer Zugbeanspruchung beaufschlagt wird, was zu einer Vergleichmäßigung der Verteilung des Bräts führen kann, und zum anderen, dass die Abdrehstelle gelängt oder gestreckt wird und dadurch anschließend besser getrennt werden kann. Die Längung der Abdrehstelle hat auch den Vorteil, dass die Wurstenden zuverlässiger verschlossen bleiben nach dem Durchtrennen der Abdrehstelle, so dass nicht unerwünscht Brät aus dem Darm ausläuft, was den Prozess erheblich stören würde. Die Aufbringung einer Zugkraft mittels der zwei mit unterschiedlichen Transportgeschwindigkeiten arbeitenden Transporteinrichtungen hat ferner einen positiven Einfluss auf die Längengenauigkeit und eine Kalibergenauigkeit der Würstchen. Dabei erfolgt der Transport der Würstchenkette diskontinuierlich oder kontinuierlich und die Geschwindigkeit der ersten und zweiten Transporteinrichtung ist mit Hilfe der Steuerungseinrichtung individuell vorgebbar.

Gemäß einer bevorzugten Ausführungsform werden einzelne Abschnitte der Würstchenkette nach dem Passieren der Transporteinrichtungen mittels einer Trenneinrichtung voneinander getrennt, so dass einzelne Würstchen oder Gruppen von Würstchen gebildet werden. So wird ein integrierter Prozess bereitgestellt, bei dem eine Würstchenkette mittels einer Füllmaschine und Abdreheinrichtung hergestellt wird und anschließend die einzelnen Würstchen zuverlässig gebildet werden können.

Bei einer besonders bevorzugten Ausführungsform wird vorgeschlagen, dass die Würstchenkette oder einzelne Würstchen oder Gruppen von Würstchen mittels einer dritten in Transportrichtung nach der ersten und zweiten Transporteinrichtung angeordneten Transporteinrichtung weitertransportiert werden. Durch eine solche dritte Transporteinrichtung, die in Transportrichtung gesehen den ersten beiden nachgeordnet ist, können die einzelnen getrennten Würstchen definiert und zuverlässig nach der Trenneinrichtung abtransportiert werden, beispielsweise von einem Verpackungsbereich, einem Tisch, einem Abtransportband oder einer Aufhängevorrichtung. Insbesondere wird durch die dritte Transporteinrichtung auch erreicht, dass die mittels der ersten und zweiten Transporteinrichtung gestreckte Würstchenkette während des Trennens gehalten oder fixiert wird, so dass eine zuverlässige Trennung erreicht werden kann.

Im Hinblick auf eine zuverlässige Durchtrennung wird vorgeschlagen, dass eine Abdrehstelle mittels eines Sensors erfasst und die Trenneinrichtung mittels eines von dem Sensor bereitgestellten, eine Abdrehstelle repräsentierenden Signals so angesteuert wird, dass die Trenneinrichtung die Würstchenkette im Bereich einer Abdrehstelle durchtrennt. Es kann sich insbesondere um einen optischen Sensor handeln, der eine Abdrehstelle zuverlässig erfasst. In Kombination mit den zwei Transporteinrichtungen, die bei entsprechender Steuerung eine Längung einer der Abdrehstellen bewirken, lässt sich eine besonders zuverlässige Durchtrennung und ein zuverlässiger Verschluss der einzelnen Würstchen erreichen. Ferner wird durch die dritte Transporteinrichtung die Würstchenkette während des Trennens zusätzlich fixiert.

Zweckmäßigerweise weist die Trenneinrichtung ein Trennmesser auf, welches zum Trennen im Wesentlichen in eine Wirkrichtung senkrecht zur Transportrichtung der Würstchenkette bewegt wird.

Das erfindungsgemäße Verfahren wird dadurch weitergebildet, dass die Geschwindigkeit der dritten Transporteinrichtung mit Hilfe der Steuerungseinrichtung ebenfalls individuell vorgebbar ist.

Besonders bevorzugt ist es, dass die Transportgeschwindigkeit des zweiten Transportbandes dann temporär erhöht wird, wenn sich eine Abdrehstelle im Bereich zwischen dem ersten und zweiten Transportband befindet. Dann wird kurzfristig und vorübergehend eine höhere Geschwindigkeit des zweiten Transportbandes mittels der Steuerungseinrichtung eingestellt. Nach der Längung kann die Transportgeschwindigkeit des zweiten Bandes wieder etwas reduziert werden. Somit ergibt sich insgesamt ein zeitlich variabler, diskontinuierlicher Prozess.

Gemäß einer weiteren bevorzugten Ausführungsform wird vorgeschlagen, dass die erste und/oder zweite und/oder dritte Transporteinrichtung zwei zueinander beabstandete bewegbare Transportelemente, insbesondere Endlosbänder aufweist, die mit der schlauchförmigen Hülle in Kontakt kommen, um diese zu transportieren.

Insgesamt werden durch die Erfindung eine Vielzahl von Vorteilen erreicht, insbesondere auch folgende:
- Es können vergleichsweise lange Abdrehstellen erzielt werden.
- Die Enden der einzelnen Würstchen bleiben zuverlässig verschlossen.
- Ein zuverlässiges Trennen auch prallgefüllter Würstchen ist möglich.

Die Erfindung wird nachstehend anhand eines bevorzugten Ausführungsbeispiels näher erläutert. Es zeigen:
- Figur 1: eine erfindungsgemäße Vorrichtung zum Herstellen von Würstchen zur Durchführung eines erfindungsgemäßen Verfahrens in einer schematischen Darstellung als Draufsicht;
- Figur 2: eine kommerzielle Vorrichtung gemäß schematischer Darstellung aus Figur 1 in einer Seitenansicht;
- Figur 3: die Vorrichtung aus Figur 2 in einer Draufsicht.

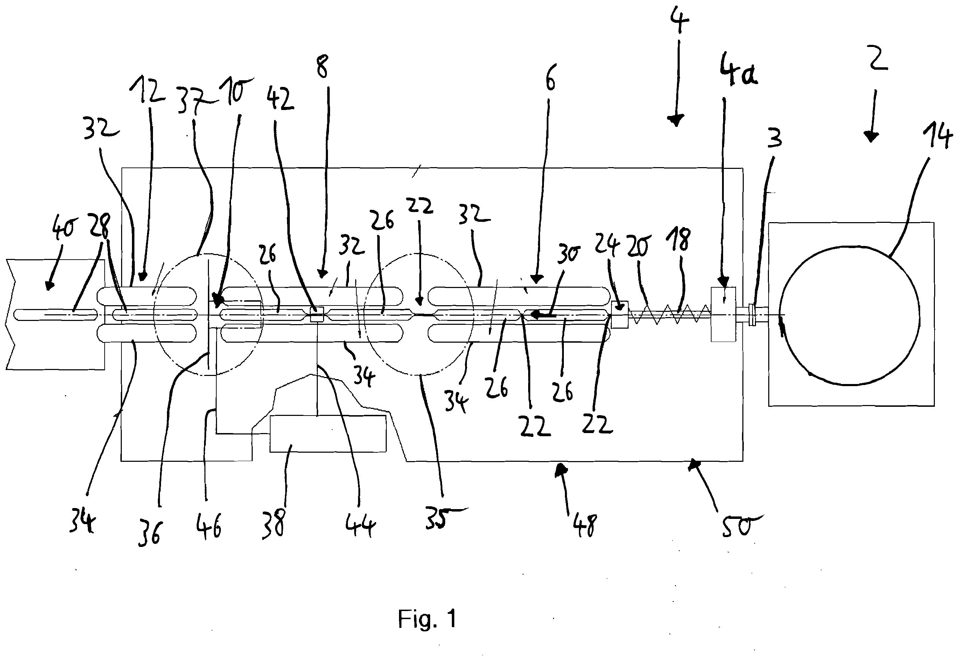

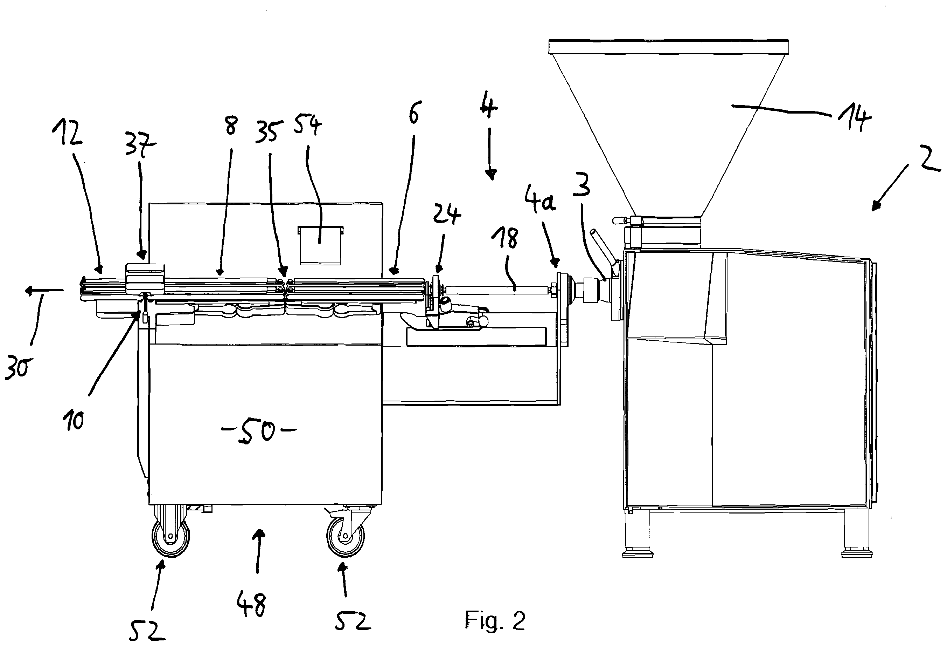

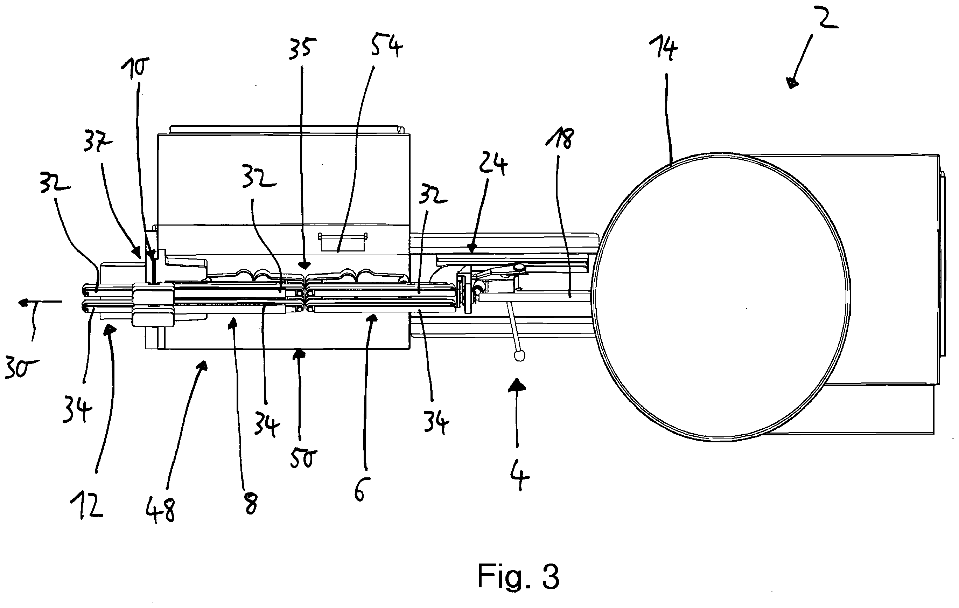

Das in den Figuren 1 bis 3 gezeigte Ausführungsbeispiel einer Vorrichtung zum Herstellen von Würstchen ist in der Figur 1 schematisch in einer Draufsicht und in den Figuren 2 und 3 anhand eines kommerziellen Produktes dargestellt, wobei nachfolgend auf beide Darstellungsformen Bezug genommen wird.

Die Vorrichtung weist eine Füllmaschine 2, eine Abdrehvorrichtung 4 zur Erzeugung von Abdrehstellen, eine erste Transporteinrichtung 6, eine zweite Transporteinrichtung 8, eine Trenneinrichtung 10 sowie eine dritte Transporteinrichtung 12 auf.

Die an sich bekannte Füllmaschine 2 weist einen Fülltrichter 14 (Figuren 2 und 3) zum Aufnehmen von Wurstbrät, eine nicht gezeigte Hebe- und Kippvorrichtung zum Befüllen des Trichters 14 mit Brät aus einem Brätwagen, eine nicht gezeigte Füllpumpe zum Fördern des Wurstbräts sowie eine Steuerungseinrichtung und ein Füllrohr 18 auf, durch welches Wurstbrät in eine schlauchförmige Hülle 20 (Wurst-Darm) einfüllbar ist.

Die Abdrehvorrichtung 4 zur Erzeugung von einzelnen Abdrehstellen 22 (Figur 1) umfasst ein Abdrehgetriebe 4a zum rotierenden Antreiben des Füllrohres 18 sowie eine Darmbremse 24 im Bereich des Endes des Füllrohres 18 auf. In bekannter Weise wird während des Befüllens der Hülle 20 ein geraffter, zuvor auf das Füllrohr 18 aufgezogener Darm durch die Darmbremse 24 hindurch abgezogen und mit Wurstbrät, welches aus dem offenen Ende des Füllrohres 18 austritt, befüllt. Durch den Abdrehvorgang werden einzelne Abschnitte 26 in dem gefüllten Darm erzeugt, die später die einzelnen Würstchen 28 bilden (Figur 1). Die einzelnen Abschnitte 26 bilden eine Würstchenkette, die in Transportrichtung 30 (Figur 1) weiter transportiert wird.

Die erste Transporteinrichtung 6, die zweite Transporteinrichtung 8 und die dritte Transporteinrichtung 12 sind in Transportrichtung 30 gesehen der Füllmaschine 2 und der Abdrehvorrichtung 4 nachgeschaltet, ggf. unter Zwischenschaltung weiterer Einrichtungen wie der Trenneinrichtung 10. Im Ausführungsbeispiel ist die erste Transporteinrichtung 6 unmittelbar im Anschluss an das Ende des Füllrohres 18 angeordnet. Sie weist zwei zueinander beabstandete, mittels eines nicht gezeigten Elektromotors antreibbare Transportelemente in Form von Endlosbändern 32, 34 auf. Der Abstand der beiden gegenüberliegenden Endlosbänder 32, 34 lässt sich verändern, so dass Würstchen unterschiedlicher Kaliber transportiert werden können.

Die zweite Transporteinrichtung 8 ist prinzipiell so wie die erste Transporteinrichtung 6 ausgebildet, so dass vollumfänglich auf die vorherigen Beschreibungen Bezug genommen ist und gleiche Bezugszeichen für baugleiche Bauteile verwendet worden sind. Die zweite Transporteinrichtung 8 schließt sich in Transportrichtung 30 an die erste Transporteinrichtung 6 an. Der Abstand zwischen beiden Transporteinrichtungen 6, 8 lässt sich je nach Anwendungsfall variieren.

Die dritte Transporteinrichtung 12 schließt sich an die zweite Transporteinrichtung 8 an. Die dritte Transporteinrichtung 12 ist prinzipiell so wie die erste Transporteinrichtung 6 ausgebildet, so dass vollumfänglich auf die vorherigen Beschreibungen Bezug genommen ist und gleiche Bezugszeichen für baugleiche Bauteile verwendet worden sind. Die dritte Transporteinrichtung 12 schließt sich in Transportrichtung 30 an die zweite Transporteinrichtung 8 an. Der Abstand zwischen beiden Transporteinrichtungen 8, 12 lässt sich je nach Anwendungsfall variieren.

Zwischen der zweiten Transporteinrichtung 8 und der dritten Transporteinrichtung 12 ist die Trenneinheit 10 mit ihrem Trennmesser 36 angeordnet. Die Trenneinrichtung 10 weist einen Elektromotor auf, der mit einer drehbaren axial bezogen auf die Transportrichtung 30 angeordneten Welle gekoppelt ist, an der ein rotierbares Messer 36 befestigt ist. Das Trennmesser 36 ist in seiner Wirk- und Bewegungsrichtung senkrecht zur Transportrichtung 30 angeordnet.

Eine Steuerungseinrichtung 38 ist mit den Transporteinrichtungen 6, 8, 12 sowie der Trenneinrichtung 10 gekoppelt, so dass Signale zum Steuern der Antriebe der Bauteile übertragen werden können.

Der dritten Transporteinrichtung 12 ist ein Gerät 40 zum Weiterverarbeiten und/oder Transportieren der einzelnen Würstchen 28 (oder Gruppen von Würstchen) in Transportrichtung 30 nachgeschaltet. Das Gerät 40 kann beispielsweise ein Tisch, ein Transportband oder eine Aufhängevorrichtung sein oder eine Verpackungsmaschine zum Verpacken der einzelnen Würstchen 28.

Ein Sensor 42 (Figur 1) zum Erfassen einer Abdrehstelle 22 ist benachbart zur Bewegungsbahn der Würstchenkette angeordnet und ist insbesondere als optischer Sensor ausgebildet. Er stellt ein Signal bereit, welches das Vorhandensein einer Abdrehstelle 22 repräsentiert und mittels einer Signalleitung 44 zu der Steuerungseinrichtung 38 übertragen werden kann. Das Signal wird von der Steuerungseinrichtung 38 verarbeitet und ein weiteres Signal generiert, welches mittels der Signalleitung 46 zu der Trenneinrichtung 10 übertragen wird, um dessen Antriebsmotor so anzusteuern und einzuschalten, dass das Trennmesser 36 die Abdrehstelle 22 möglichst mittig durchtrennt, so dass die individuellen Würstchen 28 (oder Gruppen von Würstchen) entstehen.

Wie insbesondere die Figuren 1 und 2 zeigen, sind die erste, zweite und dritte Transporteinrichtung 6, 8, 12, die Trenneinrichtung 10 und die Steuerungseinrichtung 38 nebst Signalleitungen an einer verfahrbaren Tragstruktur in Form eines Wagens 48 montiert, der ein Rahmengestell 50 und mehrere Räder 52 aufweist. Mittels eines Bedienfeldes 54 lässt sich die Steuerungseinrichtung 38 bedienen. Die Transporteinrichtungen 6, 8, 12 sowie Trennvorrichtung 10 können mittels einer Hubvorrichtung höhenverstellbar angeordnet, um an die Höhe des Füllrohres 18 angepasst werden zu können.

Die Betriebsweise und das erfindungsgemäße Verfahren zum Herstellen von Würstchen sowie weitere Details der erfindungsgemäßen Vorrichtung sind nachfolgend mit Bezug auf die Figuren erläutert:
Die Füllmaschine 2 fördert Wurstbrät durch Anschlussstutzen 3 in das Füllrohr 18. Durch das offene Ende des Füllrohres 18 wird das Wurstbrät in die Hülle 20 gefüllt. Im Bereich der Darmbremse 24 wird mithilfe der Abdrehvorrichtung 4 jeweils eine Abdrehstelle 22 erzeugt. Die einzelnen Abschnitte 26 der Würstchenkette werden von der ersten Transporteinrichtung 6, genauer gesagt deren Endlosbänder 32, 34 erfasst und in Transportrichtung (Pfeil 30 in Figur 1) weiter transportiert. Gleichzeitig wird durch den Kontakt der Endlosbänder 32, 34 mit der Würstchenkette ein Mitdrehen der Abschnitte 26 der Würstchenkette verhindert.

Im Übergabe-Bereich 35 wird die Würstchenkette an die zweite Transporteinrichtung 8 übergeben und von dessen Endlosbändern 32, 34 erfasst und weiter in Transportrichtung 30 transportiert. Die Transportgeschwindigkeit der zweiten Transporteinrichtung 8 wird wenigstens zeitweise, dann wenn die Abdrehstelle 22 im Bereich 35 ist, erhöht, so dass sie größer ist als die Transportgeschwindigkeit der ersten Transporteinrichtung 6. Aufgrund der dadurch entstehenden Relativgeschwindigkeit, das heißt der Differenz der Transportgeschwindigkeit der zweiten Transporteinrichtung und der Transportgeschwindigkeit der ersten Transporteinrichtung 6, kommt es im Bereich 35 zu einer Längung oder Streckung der Abdrehstelle 22 (Figur 1). Die Relativgeschwindigkeit wird an den jeweiligen Anwendungsfall angepasst. Mittels der Steuerungseinrichtung 38 wird die Vorrichtung so betrieben, dass die zweite Transporteinrichtung 8, genauer gesagt dessen Antriebsmotor wenigstens zeitweise beschleunigt wird, während die erste Transporteinrichtung 6 mit konstanter Transportgeschwindigkeit betrieben wird.

Die Würstchenkette wird von der zweiten Transporteinrichtung 8 weiter transportiert, und eine Abdrehstelle 22, die zuvor gestreckt worden ist, kommt in den Bereich des Sensors 42, so dass dieser während des Passierens der - gestreckten - Abdrehstelle 22 ein Signal durch Signalleitung 44 an die Steuerungseinrichtung 38 abgibt. Die Steuerungseinrichtung 38 verarbeitet das Signal unter Berücksichtigung der Transportgeschwindigkeiten und des Abstandes zwischen Sensor 42 und Trennmesser 36 der Trenneinrichtung 10 derartig, dass ein Signal von der Steuerungseinrichtung 38 durch die Signalleitung 46 zu dem Antrieb der Trenneinrichtung 10 abgegeben wird, so dass das Trennmesser 36 etwa mittig die im Trenn-Bereich 37 befindliche Abdrehstelle 32 durchtrennt. So entstehen einzelne Würstchen 28 oder zusammenhängende Gruppen von Würstchen 28, je nachdem wie die Steuerungseinrichtung 38 programmiert worden ist. Dadurch, dass die Würstchen zusätzlich von der dritten Transporteinrichtung 12 während des Trennens gehalten werden, kann der Schnitt besonders zuverlässig ausgeführt werden.

Würstchen 28 gelangen dann in den Bereich der dritten Transporteinrichtung 12, die die Würstchen 28 erfasst und in Transportrichtung 30 in Richtung auf das Gerät 40, etwa einen Tisch oder eine Aufhängevorrichtung oder dergleichen weiter transportiert. Die dritte Transporteinrichtung 12 kann ebenfalls von der Steuerungseinrichtung 38 mittels einer nicht gezeigten Signalleitung angesteuert werden. Die Geschwindigkeit ist einstellbar. Auch die Relativgeschwindigkeiten bezogen auf die Transporteinrichtung 6 und 8 sind einstellbar und variabel.

Die erste, zweite und/oder dritte Transporteinrichtung 6, 8, 12 können mit konstanter Transportgeschwindigkeit oder auch mit zeitlich variabler Transportgeschwindigkeit betrieben werden.

Es sind eine Reihe von Modifikationen des erfindungsgemäßen Verfahrens und der Vorrichtung denkbar. So kann beispielsweise anstatt einer Steuerungseinrichtung 38 auch die Steuerungseinrichtung der Füllmaschine 2 verwendet werden, um die Transporteinrichtung 6 und/oder Transporteinrichtung 8 und/oder Transporteinrichtung 12 und/oder die Trenneinrichtung 10 anzusteuern bzw. Signale des Sensors 42 zu verarbeiten. In diesem Fall würden entsprechende Signalleitungen zu der Steuerungseinrichtung der Füllmaschine 2 gelegt werden.

Es können anstelle der Endlosbänder 32, 34 auch andere Transportelemente zum Einsatz kommen, beispielsweise rotierende Räder oder flügelzellenartige Transportelemente, die mit der Würstchenkette in Eingriff kommen.

## Patentansprüche

1. Verfahren zum Herstellen von Würstchen (28), bei dem
Wurstbrät mittels einer Füllmaschine (2) in eine schlauchförmige Hülle (20) eingefüllt wird und
die gefüllte Hülle (20) mittels einer Abdrehvorrichtung (4) zur Erzeugung von Abdrehstellen (22) in Abschnitte eingeteilt wird, so dass eine Würstchenkette entsteht,
wobei die Würstchenkette mittels mindestens zweier in Transportrichtung (30) der Würstchenkette hintereinander geschalteten Transporteinrichtungen (6, 8) weitertransportiert wird,
**dadurch gekennzeichnet, dass** die Transporteinrichtungen (6, 8) mittels einer Steuerungseinrichtung (38) so gesteuert werden, dass die Transportgeschwindigkeit der in Transportrichtung zweiten Transporteinrichtung (8) temporär zur Transportgeschwindigkeit der ersten Transporteinrichtung (6) erhöht wird,
wobei der Transport der Würstchenkette diskontinuierlich oder kontinuierlich erfolgt und die Geschwindigkeit der ersten und zweiten Transporteinrichtung (6, 8) mit Hilfe der Steuerungseinrichtung (38) individuell vorgebbar ist.

2. Verfahren nach Anspruch 1,
**dadurch gekennzeichnet, dass** die Relativgeschwindigkeit zwischen der ersten und zweiten Transporteinrichtung (6, 8) so eingestellt wird, dass eine Abdrehstelle (22) zwischen zwei Abschnitten (26) der gefüllten schlauchförmigen Hülle (20) gelängt wird.

3. Verfahren nach Anspruch 1 oder 2,
**dadurch gekennzeichnet, dass** einzelne Abschnitte (26) der Würstchenkette nach dem Passieren der Transporteinrichtungen (6, 8) mittels einer Trenneinrichtung (10) voneinander getrennt werden, so dass einzelne Würstchen (28) oder Gruppen von Würstchen (28) gebildet werden.

4. Verfahren nach Anspruch 1, 2 oder 3,
**dadurch gekennzeichnet, dass** die Würstchenkette oder einzelne Würstchen (28) oder Gruppen von Würstchen (28) mittels einer dritten in Transportrichtung nach der ersten und zweiten Transporteinrichtung angeordneten Transporteinrichtung (12) weitertransportiert und/oder gehalten werden.

5. Verfahren nach mindestens einem der vorstehenden Ansprüche,
**dadurch gekennzeichnet, dass** eine Abdrehstelle (32) mittels eines Sensors (42) erfasst wird und die Trenneinrichtung (10) mittels eines von dem Sensor (42) bereitgestellten, eine Adrehstelle (22) repräsentierenden Signals so angesteuert wird, dass die Trenneinrichtung (10) die Würstchenkette im Bereich einer Abdrehstelle (22) durchtrennt.

6. Verfahren nach Anspruch 3,
**dadurch gekennzeichnet, dass** die Trenneinrichtung ein Trennmesser (36) aufweist, welches zum Trennen im Wesentlichen in eine Wirkrichtung senkrecht zur Transportrichtung (30) der Würstchenkette bewegt wird.

7. Verfahren nach Anspruch 4,
**dadurch gekennzeichnet, dass** die Geschwindigkeit der dritten Transporteinrichtung (12) mit Hilfe der Steuerungseinrichtung (38) individuell vorgebbar ist.

8. Verfahren nach einem der Ansprüche 1 bis 7,
**dadurch gekennzeichnet, dass** die Relativgeschwindigkeiten des ersten, zweiten und/oder dritten Transporteinrichtung (6, 8, 12) so vorgebbar sind, dass sie zeitlich variabel sind.

9. Vorrichtung zum Herstellen von Würstchen, insbesondere zur Durchführung eines Verfahrens nach mindestens einem der vorstehenden Ansprüche, mit:
einer Füllmaschine (2) zum Einfüllen von Wurstbrät in eine schlauchförmige Hülle (20) und
einer Abdrehvorrichtung (4) zum Abteilen der gefüllten Hülle (20) in einzelne Abschnitte (26) unter Bildung einer Abdrehstelle (22),
einer ersten Transporteinrichtung (6), die in Transportrichtung der Abdrehvorrichtung (4) nachgeschaltet ist und
einer zweiten Transporteinrichtung (8), die in Transportrichtung der ersten Transporteinrichtung (6) nachgeschaltet ist,
**gekennzeichnet durch** eine Steuerungseinrichtung (38), die mit der ersten und zweiten Transporteinrichtung (6, 8) so zusammenwirkt, dass die Transportgeschwindigkeit der zweiten Transporteinrichtung (8) temporär zur Transportgeschwindigkeit der ersten Transporteinrichtung (6) erhöht wird, wobei die Geschwindigkeit der ersten, zweiten Transporteinrichtung (6, 8,) für einen diskontinuierlichen oder kontinuierlichen Transport der Würstchenkette individuell einstellbar ist.

10. Vorrichtung nach Anspruch 9,
**dadurch gekennzeichnet, dass** die Steuerungseinrichtung (38) die Relativgeschwindigkeit zwischen der ersten und zweiten Transporteinrichtung (6, 8) so einstellt, dass eine Abdrehstelle (22) zwischen zwei Abschnitten der gefüllten schlauchförmigen Hülle (20) gelängt werden kann.

11. Vorrichtung nach einem der Ansprüche 9 und 10,
**dadurch gekennzeichnet, dass** eine dritte Transporteinrichtung (12) der ersten und zweiten Transporteinrichtung (6, 8) in Transportrichtung gesehen nachgeschaltet ist.

12. Vorrichtung nach einem der Ansprüche 9 bis 11,
**gekennzeichnet durch** eine Trenneinrichtung (10), die der ersten und zweiten Transporteinrichtung (6, 8) in Transportrichtung gesehen nachgeschaltet ist und die ggf. in Transportrichtung gesehen vor der dritten Transporteinrichtung (12) angeordnet ist.

13. Vorrichtung nach einem der Ansprüche 9 bis 12,
**gekennzeichnet durch** einen benachbart zur Bewegungsbahn der schlauchförmigen Hülle (20) angeordneten Sensor (42) zur Erfassung einer Abdrehstelle (22) zwischen zwei Abschnitten, einer von dem Sensor (42) zu der Steuerungseinrichtung (38) führenden Signalleitung (44) und einer weiteren Signalleitung (46) zwischen Steuerungseinrichtung (38) und Trenneinrichtung (10).

14. Vorrichtung nach Anspruch 12,
**dadurch gekennzeichnet, dass** die Trenneinrichtung (10) ein Trennmesser (36) aufweist, welches im Wesentlichen in eine Wirkrichtung senkrecht zur Transportrichtung (30) der Würstchenkette bewegbar ist.

15. Vorrichtung nach einem der Ansprüche 9 bis 14,
**dadurch gekennzeichnet, dass** die erste und/oder zweite und/oder dritte Transporteinrichtung (6, 8, 12) zwei zueinander beabstandete bewegbare Transportelemente, insbesondere Endlosbänder (32, 34) aufweist, die mit der schlauchförmigen Hülle (20) in Kontakt kommen, um diese zu transportieren.

16. Vorrichtung nach einem der Ansprüche 11 bis 15,
**dadurch gekennzeichnet, dass** die dritte Transporteinrichtung (12) von der Steuerungseinrichtung (38) mittels einer Signalleitung angesteuert wird.

17. Vorrichtung nach einem der Ansprüche 11 bis 16,
**dadurch gekennzeichnet, dass** die Geschwindigkeit der dritten Transporteinrichtung (12) einstellbar ist.

## Claims

1. A process for producing sausages (28) in which sausage meat is introduced into a tubular case (20) by means of a filling machine (2) and the filled case (20) is divided into portions by means of a twisting-off device (4) for producing twist-off locations (22) so that the result is a sausage chain,
wherein the sausage chain is further transported by means of at least two transport devices (6, 8) connected in succession in the sausage chain transport direction (30),
**characterised in that**
the transport devices (6, 8) are so controlled by means of a control device (38) that the transport speed of the second transport device (8) in the transport direction is temporarily increased to the transport speed of the first transport device (6),
wherein transport of the sausage chain is effected discontinuously or continuously and the speed of the first and second transport device (6, 8) can be individually predetermined by means of the control device (38).

2. A process according to claim 1 **characterised in that** the relative speed between the first and second transport devices (6, 8) is so adjusted that a twist-off location (22) between two portions (26) of the filled tubular case (20) is elongated.

3. A process according to claim 1 or claim 2 **characterised in that** individual portions (26) of the sausage chain are separated from each other after passing the transport devices (6, 8) by means of a separating device (10) so that individual sausages (28) or groups of sausages (28) are formed.

4. A process according to claim 1, claim 2 or claim 3 **characterised in that** the sausage chain or individual sausages (28) or groups of sausages (28) are further transported and/or are held by means of a third transport device (12) arranged after the first and second transport devices in the transport direction.

5. A process according to at least one of the preceding claims **characterised in that** a twist-off location (32) is detected by means of a sensor (42) and the separating device (10) is actuated by means of a signal provided by the sensor (42) and representing a twist-off location (22) in such a way that the separating device (10) severs the sausage chain in the region of a twist-off location (22).

6. A process according to claim 3 **characterised in that** the separating device has a separating blade (36) which for severing the sausage chain is moved substantially in an operative direction perpendicularly to the sausage chain transport direction (30).

7. A process according to claim 4 **characterised in that** the speed of the third transport device (12) can be individually predetermined by means of the control device (38).

8. A process according to one of claim 1 to 7 **characterised in that** the relative speeds of the first, second and/or third transport devices (6, 8, 12) can be so predetermined that they are variable in respect of time.

9. Apparatus for producing sausages, in particular for carrying out a process according to at least one of the preceding claims, comprising:
a filling machine (2) for introducing sausage meat into a tubular case (20), and
a twisting-off device (4) for dividing the filled case (20) into individual portions (26), with the formation of a twist-off location (22),
a first transport device (6) which is disposed downstream of the twisting-off device (4) in the transport direction, and
a second transport device (8) which is disposed downstream of the first transport device (6) in the transport direction,
**characterised by** a control device (38) co-operating with the first and second transport device (6, 8) in such a way that the transport speed of the second transport device (8) is temporarily increased to the transport speed of the first transport device (6), wherein the speed of the first and second transport devices (6, 8) is individually adjustable for discontinuous or continuous transport of the sausage chain.

10. Apparatus according to claim 9 **characterised in that** the control device (38) so sets the relative speed between the first and second transport devices (6, 8) that a twist-off location (22) between two portions of the filled tubular case (20) can be elongated.

11. Apparatus according to one of claims 9 and 10 **characterised in that** a third transport device (12) is connected downstream of the first and second transport devices (6, 8) in the transport direction.

12. Apparatus according to one of claims 9 to 11 **characterised by** a separating device (10) which is connected downstream of the first and second transport devices (6, 8) in the transport direction and which is possibly arranged upstream of the third transport device (12) in the transport direction.

13. Apparatus according to one of claims 9 to 12 **characterised by** a sensor (42) arranged adjacent to the path of movement of the tubular case (20) for detecting a twist-off location (22) between two portions, a signal line (44) leading from the sensor (42) to the control device (38) and a further signal line (46) between the control device (38) and the separating device (10).

14. Apparatus according to claim 12 **characterised in that** the separating device (10) has a separating blade (36) movable substantially in an operative direction perpendicularly to the sausage chain transport direction (30).

15. Apparatus according to one of claims 9 to 14 **characterised in that** the first and/or second and/or third transport device (6, 8, 12) has two mutually spaced movable transport elements, in particular endless belts (32, 34), which come into contact with the tubular case (20) to transport it.

16. Apparatus according to one of claims 11 to 15 **characterised in that** the third transport device (12) is actuated by the control device (38) by means of a signal line.

17. Apparatus according to one of claims 11 to 16 **characterised in that** the speed of the third transport device (12) is adjustable.

## Revendications

1. Procédé servant à fabriquer des petites saucisses (28), dans lequel
de la chair à saucisse est transvasée dans un boyau (20) de forme tubulaire au moyen d'une machine de remplissage (2), et
le boyau (20) rempli est divisé en portions au moyen d'un dispositif à ligaturer (4) servant à produire des emplacements de ligature (22) de manière à former une chaîne de petites saucisses,
dans lequel la chaîne de petites saucisses continue à être transportée au moyen d'au moins deux dispositifs de transport (6, 8) montés l'un derrière l'autre dans la direction de transport (30) de la chaîne de petites saucisses,
**caractérisé en ce que** les dispositifs de transport (6, 8) sont commandés au moyen d'un dispositif de commande (38) de telle sorte que la vitesse de transport du deuxième dispositif de transport (8) dans la direction de transport est augmentée de manière temporaire par rapport à la vitesse de transport du premier dispositif de transport (6),
dans lequel le transport de la chaîne de petites saucisses est effectué en discontinu ou en continu et la vitesse du premier et du deuxième dispositif de transport (6, 8) peut être prédéfinie de manière individuelle à l'aide du dispositif de commande (38).

2. Procédé selon la revendication 1,
**caractérisé en ce que** la vitesse relative entre le premier et le deuxième dispositif de transport (6, 8) est réglée de telle sorte qu'un emplacement de ligature (22) est allongé entre deux portions (26) du boyau (20) rempli de forme tubulaire.

3. Procédé selon la revendication 1 ou 2,
**caractérisé en ce que** diverses portions (26) de la chaîne de petites saucisses sont séparées les unes des autres après le passage des dispositifs de transport (6, 8) au moyen d'un dispositif de séparation (10) de sorte que diverses petites saucisses (28) ou divers groupes de petites saucisses (28) sont formé(e)s.

4. Procédé selon la revendication 1, 2 ou 3,
**caractérisé en ce que** la chaîne de petites saucisses ou diverses petites saucisses (28) ou divers groupes de petites saucisses (28) continuent à être transporté(e)s et/ou sont maintenu(e)s au moyen d'un troisième dispositif de transport (12) disposé dans la direction de transport après le premier et le deuxième dispositif de transport.

5. Procédé selon au moins l'une quelconque des revendications précédentes,
**caractérisé en ce qu'**un emplacement de ligature (32) est détecté au moyen d'un capteur (42), et le dispositif de séparation (10) est piloté au moyen d'un signal fourni par le capteur (42), représentant un emplacement de ligature (22) de sorte que le dispositif de séparation (10) sectionne la chaîne de petites saucisses dans la zone d'un emplacement de ligature (22).

6. Procédé selon la revendication 3,
**caractérisé en ce que** le dispositif de séparation présente une lame de séparation (36), qui est déplacée aux fins de la séparation sensiblement dans une direction d'action de manière perpendiculaire par rapport à la direction de transport (30) de la chaîne de petites saucisses.

7. Procédé selon la revendication 4,
**caractérisé en ce que** la vitesse du troisième dispositif de transport (12) peut être prédéfinie de manière individuelle à l'aide du dispositif de commande (38).

8. Procédé selon l'une quelconque des revendications 1 à 7,
**caractérisé en ce que** les vitesses relatives du premier, deuxième et/ou troisième dispositif de transport (6, 8, 12) peuvent être prédéfinies de telle sorte qu'elles sont variables dans le temps.

9. Dispositif servant à fabriquer des petites saucisses, en particulier servant à mettre en oeuvre un procédé selon au moins l'une quelconque des revendications précédentes, comprenant :
une machine de remplissage (2) servant à transvaser de la chair à saucisse dans un boyau (20) de forme tubulaire et
un dispositif à ligaturer (4) servant à diviser le boyau (20) rempli en portions individuelles (26) en formant un emplacement de ligature (22),
un premier dispositif de transport (6), qui est monté en aval du dispositif à ligaturer (4) dans la direction de transport, et
un deuxième dispositif de transport (8), qui est monté en aval du premier dispositif de transport (6) dans la direction de transport,
**caractérisé par** un dispositif de commande (38), qui coopère avec le premier et le deuxième dispositif de transport (6, 8) de telle sorte que la vitesse de transport du deuxième dispositif de transport (8) est augmentée de manière temporaire par rapport à la vitesse de transport du premier dispositif de transport (6), dans lequel la vitesse du premier, deuxième dispositif de transport (6, 8) peut être réglée de manière individuelle en vue d'un transport discontinu ou continu de la chaîne de petites saucisses.

10. Dispositif selon la revendication 9,
**caractérisé en ce que** le dispositif de commande (38) règle la vitesse relative entre le premier et le deuxième dispositif de transport (6, 8) de sorte qu'un emplacement de ligature (22) peut être allongé entre deux portions du boyau (20) rempli de forme tubulaire.

11. Dispositif selon l'une quelconque des revendications 9 et 10,
**caractérisé en ce qu'**un troisième dispositif de transport (12) est monté, vu dans la direction de transport, en aval du premier et du deuxième dispositif de transport (6, 8) .

12. Dispositif selon l'une quelconque des revendications 9 à 11,
**caractérisé par** un dispositif de séparation (10), qui est monté, vu dans la direction de transport, en aval du premier et du deuxième dispositif de transport (6, 8) et qui est disposé éventuellement, vu dans la direction de transport, devant le troisième dispositif de transport (12).

13. Dispositif selon l'une quelconque des revendications 9 à 12,
**caractérisé par** un capteur (42) disposé de manière adjacente par rapport à la voie de déplacement du boyau (20) de forme tubulaire, servant à détecter un emplacement de ligature (22) entre deux portions, une ligne de signaux (44) menant depuis le capteur (42) vers le dispositif de commande (38) et une autre ligne de signaux (46) entre le dispositif de commande (38) et le dispositif de séparation (10).

14. Dispositif selon la revendication 12,
**caractérisé en ce que** le dispositif de séparation (10) présente une lame de séparation (36), qui peut être déplacée sensiblement dans une direction d'action de manière perpendiculaire par rapport à la direction de transport (30) de la chaîne de petites saucisses.

15. Dispositif selon l'une quelconque des revendications 9 à 14,
**caractérisé en ce que** le premier et/ou le deuxième et/ou le troisième dispositif de transport (6, 8, 12) présente(nt) deux éléments de transport pouvant être déplacés espacés l'un de l'autre, en particulier deux bandes sans fin (32, 34), qui viennent en contact avec le boyau (20) de forme tubulaire afin de le transporter.

16. Dispositif selon l'une quelconque des revendications 11 à 15,
**caractérisé en ce que** le troisième dispositif de transport (12) est piloté par le dispositif de commande (38) au moyen d'une ligne de signaux.

17. Dispositif selon l'une quelconque des revendications 11 à 16,
**caractérisé en ce que** la vitesse du troisième dispositif de transport (12) peut être réglée.
